# EUROPEAN PATENT APPLICATION

(11) **EP 1 841 136 A2**
(43) Date of publication of application: **03.10.2007**
(21) Application number: 07103617.2
(22) Date of filing: 06.03.2007
(51) Int. Cl.: H04L 12/28

(54) **Apparatus, method and system for managing event information**

(30) Priority: 29.03.2006 KR 20060028506
(71) Applicant: Samsung Electronics Co., Ltd., Seoul 442-742 (KR)
(72) Inventor: Jin, Ho, Gyeonggi-do (KR); Sohn, Young-Chul, Seoul (KR)
(74) Representative: Clark, David James

(57) **Abstract**

An apparatus for managing event information is provided. The apparatus (250) includes an event-registration module (258) that controls a controlled device (290), and performs an event-registration process on the controlled device (290); an event-managing module (260) that receives event information about events that have occurred in the controlled device (290) according to the performance of the event-registration process, and provides the event information to an event-management-request device (210); and a storage module (256) that stores the event information which is received.

## Description

Methods and apparatuses consistent with the present invention relate to managing event information.

As communication and network technologies develop, various types of home networks have been introduced, and various technologies have been suggested in order to increase user convenience in controlling and monitoring various devices that constitute the home network.

Especially, various technologies have been suggested, in which event information (i.e., information that shows the state change of each device, such as starting to record broadcasting received by a set-top box, on video tape at a set time, or the finishing of a wash in a washing machine), which is generated in each device, are collected and provided to the user, and thus the user can conveniently recognize the current status and change of status of each device.

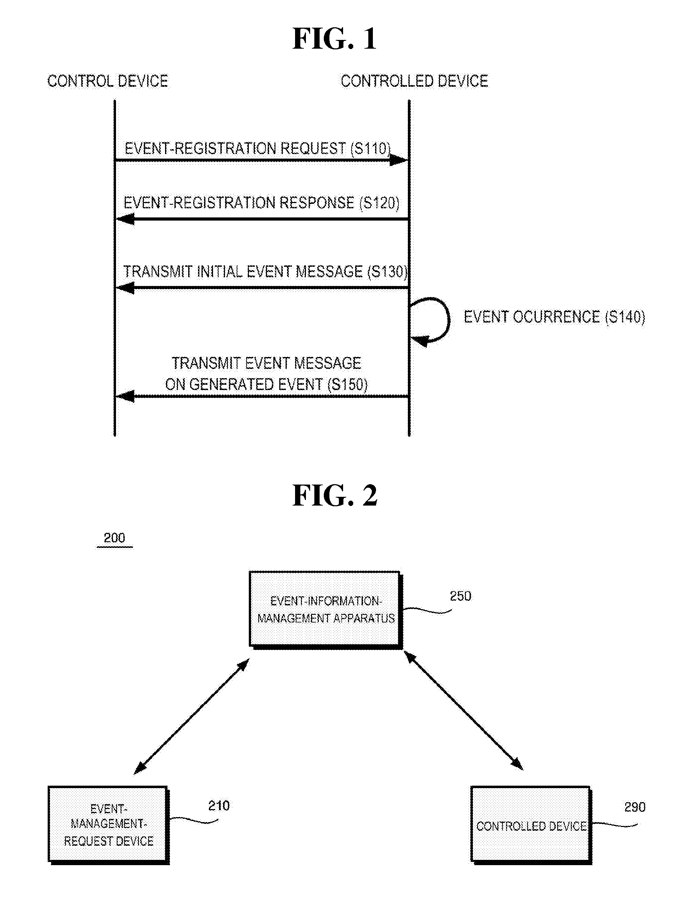

As a representative example of such a technology, in a Universal Plug and Play (UPnP) home network, event information, which is generated in each device in the home network, can be provided to a user through the process illustrated in FIG. 1.

FIG. 1 is a flow chart illustrating an outline of a related art process of acquiring event information according to the UPnP technology.

Here, the "control device" changes the state of other devices that constitute a home network according to user input, or receives information about the state change generated by other devices, and provides the information to the user. Further, the "controlled device" is operated by the control device, and provides information about events that have occurred to the control device through a predetermined procedure. Here, the control device and the controlled device are included in the same home network.

Referring to FIG. 1, the control device sends a request for event registration to the controlled device in order to receive events that have occurred in the controlled device (S110). Such an event-registration request can be performed by the user input of the control device or can be automatically performed as the control device starts to operate.

The controlled device sends a response to the event-registration request to the control device (S120). Then, the controlled device transmits an initial event message, which includes information on the state of the current controlled device, to the control device (S 130).

Then, if an event, which shows the state change of the controlled device, occurs (S140), an event message, which includes information about the occurred event, is transmitted to the control device (S150). Here, in the case where a plurality of events occur at the same time, information about the events can be transmitted after including the information in one event message.

Hence, the control device analyzes the transmitted event message, and thus can provide the information generated in the controlled device to the user.

However, in order for the control device to acquire information about events that have occurred in the controlled device, the control device should request event registration on the controlled device. Hence, in the case of a device that cannot perform event registration, the control device cannot get event information, which is generated in the controlled device, and unless the control device and the controlled device belong to the same home network, even though the control device has the function for requesting event registration, the control device cannot obtain event information generated in the controlled device.

Further, even when the control device can perform event registration, in the case where the power of the control device is off, the control device cannot receive event information generated in the controlled device. For example, in the case where the user gives a command in advance to a personal digital assistant (PDA) i.e., a control device, to record a program on a personal video recorder (PVR), and turns off the PDA, if the recording fails, the PVR cannot transmit event information about the failure since it was turned off, and thus the PDA cannot receive the event information.

Exemplary embodiments of the present invention aim to address the above disadvantages and other disadvantages not described above.

According to an aspect of the present invention, there is provided an apparatus for managing event information, the apparatus including an event-registration module that controls a controlled device and performs an event-registration process on the controlled device; an event-managing module that receives event information about events that have occurred in the controlled device according to the performance of the event-registration process, and provides the event information to an event-management-request device; and a storage module that stores the event information which is received.

According to an aspect of the present invention, there is provided a method of managing event information, the method including performing event registration process jointly on a controlled device; receiving event information on events that have occurred in the controlled device as the event registration process is performed; and providing the event information which is received to an event-management-request device.

According to an aspect of the present invention, there is provided a system for managing event information, the system including a controlled device; an event-information-management apparatus that controls the controlled device and receives event information about events that have occurred in the controlled device; and an event-management-request device that receives the event information from the event-information-management apparatus, and outputs the event information.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a flow chart illustrating a related art process of acquiring event information;
FIG. 2 is a block diagram illustrating a system for managing event information according to an exemplary embodiment of the present invention;
FIG. 3 is a block diagram illustrating the structure of an apparatus for managing event information according to an exemplary embodiment of the present invention;
FIG. 4 is a flow chart illustrating a method of managing event information according to an exemplary embodiment of the present invention;
FIG. 5 illustrates a table about event-log information for use with an exemplary embodiment of the present invention.

Exemplary embodiments of the present invention will be described in detail with reference to the accompanying drawings.

The present invention is described hereinafter with reference to flowchart illustrations of user interfaces, methods, and computer program products according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded into a computer or other programmable data processing apparatus to cause a series of operational steps to be performed in the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "module", as used herein, means, but is not limited to, a software or hardware component, such as a Field Programmable Gate Array (FPGA) or an Application Specific Integrated Circuit (ASIC), which performs certain tasks. A module may advantageously be configured to reside in the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

Further, the "event" used in the present specification refers to various state changes occurred in devices that belong to the home network, such as starting or terminating recording broadcasting in a set-top box or stopping a DVD player. Various events can occur depending on the type of each device.

Further, the "event information" used in the present information refers to device-identification information, event-occurrence time, and event details.

FIG. 2 is a block diagram illustrating a system for managing event information according to an exemplary embodiment of the present invention. The system for managing event information includes an event-management-request device 210, an event-information-management apparatus 250, and a controlled device 290.

Here, the event-management-request device 210 and the event-information-management apparatus 250 are separately shown in FIG. 2, but they can reside in one device.

Further, the event-management-request device 210, the event-information-management apparatus 250, and the controlled device 290 belong to a single home network, but are not limited to this structure.

In other words, it is possible that only the event-information-management apparatus and the controlled device 290 belong to a single home network. Here, the event-management-request device 210 can be a portable mobile device that can be connected to the event-information-management apparatus 250, or a terminal device that can be remotely connected to the event-information-management apparatus 250. Further, in this case, the event-information-management apparatus 250 works as a gateway in the home network.

The event-management-request device 210 includes not only control devices in the home network based on universal plug & play (UPnP) technology as illustrated in FIG. 2, but also devices that cannot be directly connected to the controlled device 290, or devices that do not use UPnP technology.

Further, the event-management-request device 210 requests the event-information-management apparatus 250 to collect information on events that have occurred in the controlled device 290 and to provide the collected information by the user input or as the event-management-request device 210 begins to work.

The event-information-management apparatus 250 collects event information generated in the controlled device 290, and provides the collected information to the event-management-request device 210 according to the request of the event-management-request device 210.

Further, the event-information-management apparatus 250 can control the controlled device 290, and can provide the event information according to the control of the controlled device 290 to the event-management-request device 210.

The controlled device 290 is controlled by the event-information-management apparatus 250, and transmits information on events that have occurred according to the control or events that have occurred in the controlled device 290 to the event-information-management apparatus 250. The controlled device 290 along with the event-information-management apparatus 250 performs the event-registration process for event transmission.

The operation of the system 200 illustrated in FIG. 2 is described in more detail in the following.

First, the event-management-request device 210 requests management of event information on events that have occurred in the controlled device 290 on the event-information-management apparatus 250. Here, the event-management-request device 210 communicates according to UPnP with the event-information-management apparatus 250, or communicates using a predetermined protocol.

The event-information-management apparatus 250 requests event registration on the controlled device 290, and the controlled device 290 gives a response to the request. Here, in the case where there are multiple controlled devices 290, the event-information-management apparatus 250 can request event registration for all controlled devices or for a few controlled devices. For explanatory convenience, only one controlled device 290 is shown in FIG. 2.

After the event-registration request and response process is completed, if an event occurs in the controlled device 290, an event message that includes event information on the occurred event is transmitted to the event-information-management apparatus 250.

The event-information-management apparatus 250 extracts event information from the transmitted event message and transmits the information to the event-management-request device 210, or stores the extracted event information and provides the information according to the request of the event-management-request device 210.

The event-management-request device 210 displays event information received from the event-information-management apparatus 250, or outputs the information as sound in order to provide the information to the user.

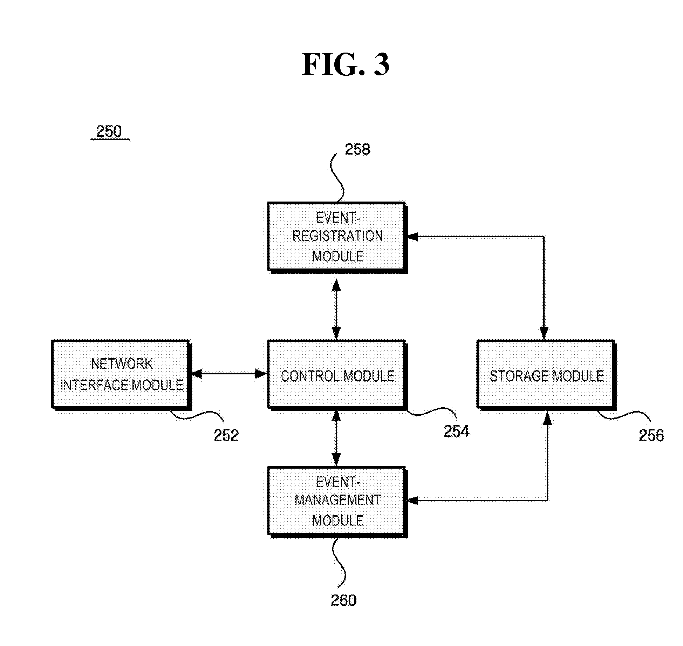

FIG. 3 is a block diagram illustrating the structure of an apparatus for managing event information according to an exemplary embodiment of the present invention.

Referring to FIG. 3, the event-information-management apparatus 250 includes a network-interface module 252, a control module 254, a storage module 256, an event-registration module 258, and an event-managing module 260.

The network-interface module 252 communicates with the event-management-request device 210 or the controlled device 290, and wire or wireless communication is possible depending on the communication medium.

The control module 254 analyzes a message received through a network interface module 252 in connection with event-information management, or generates a message to transmit to the event-management-request device 210 or the controlled device 290, and transmits the message through the network-interface module 252. Further, the control module 254 generates a control message to control the controlled device 290, and transmits the message through the network-interface module 252.

The event-registration module 258 extracts information to request event registration on the controlled device 290 from the storage module 256, and provides the information to the control module 254. The control module 254 generates a message for the event-registration request based on the extracted information, and transmits the message to the controlled device 290 through the network-interface module 252. Some examples of the information for the event-registration request are identification information of the event-information-management apparatus 250 and identification of the controlled device 290.

The message transmission on the controlled device 290 can also be performed by the event-registration module 258. Additionally, the event-registration module 258 can be directly connected to the network-interface module 252 when operated.

The event-managing module 260 analyzes an event message received from the controlled device 290, stores event information on occurred events in the storage module 256, and manages the information. Further, the event-managing module 260 extracts event information stored in the storage module 256 according to the request of the event-management-request device 210, and provides the information to the control module 254. The control module 254 generates a message to provide event-log information based on the extracted information, and transmits the message to the event-management-request device 210 through the network-interface module 252.

The storage module 256 stores event information on events that have occurred in the controlled device 290, and information for the event-registration request sent to the controlled device 290.

The term "module", as used herein, means, but is not limited to, a software or hardware component, such as a Field Programmable Gate Array (FPGA) or an Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

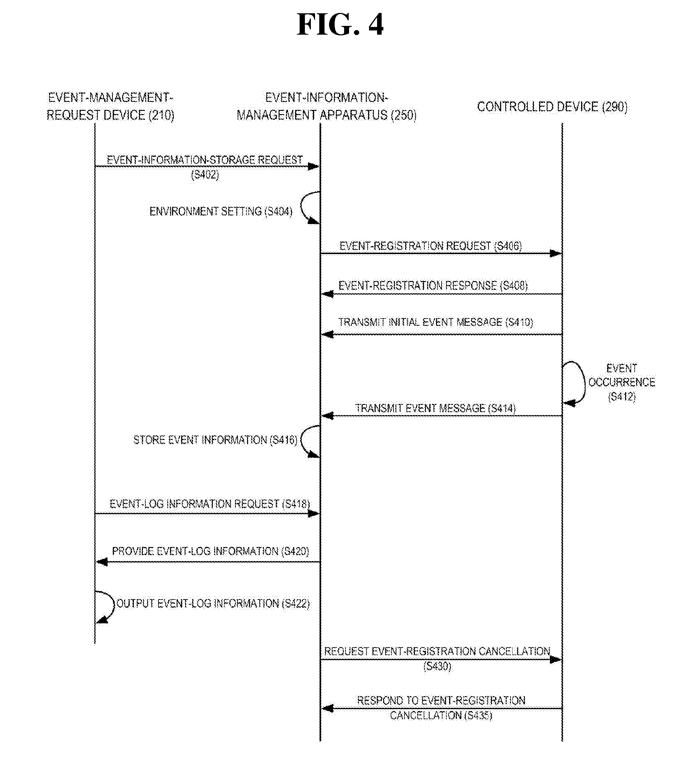

The operation of each module illustrated in FIG. 3 is described in detail with reference to the flow chart illustrated in FIG. 4.

First, the event-management-request device 210 requests the event-information-management apparatus to store event information generated in the controlled device 290 (S402).

Further, the user can set the event-information-management apparatus 250 in the manner that events that occur in all devices in the network can be automatically managed. Here, the event-information-management apparatus 250 can manage events without the event-information-storage request from the event-management-request device 210.

The control module 254 of the event-information-management apparatus 250 operates the event-registration module 258, and sets the environment for storing event information (S404). For example, the event-registration module 258 can establish the environment for storing event information depending on the event-occurrence time, the type of the controlled device where an event has occurred, or the type of an event.

Further, when the user requests storage of event information through the event-management-request device 210 by providing information on the environment setting, the environment for storing event information in the type the user wants can be established.

Then, the event-registration module 258 extracts information from the storage module 256 to send a request for event registration to the controlled device 290, and provides the information to the control module 254. The control module 254 generates a message for the event-registration request based on the extracted information, and transmits the message to the controlled device 290 through the network-interface module 252 (S406). Some examples of the event-registration request are identification information of the event-information-management apparatus 250 and identification of the controlled device 290. Such information can be stored in the controlled device 290, and later, in the case where an event occurs in the controlled device 290, the information can be utilized when transmitting an event message.

The controlled device 290 transmits an event-registration response in response to the request (S408), and an initial event message that indicates the current state of the controlled device 290 to the event-information-management apparatus 250 (S410).

For example, in the case where the controlled device 290 is a DVD player, if the DVD is currently being reproduced, the current state is the "reproduction", and the information that corresponds to the current state is transmitted to the event-information-management apparatus 250 in the form of a message.

If an event occurs in the controlled device 290 (S412), the controlled device 290 transmits an event message that includes event information on the occurred events to the event-information-management apparatus 250 (S414).

Here, event information can include a variable that indicates the state change of the controlled device, and the value of the variable. Such information can be transmitted in the form of a frame or a structural document such as an XML document.

The control module 254 of the event-information-management apparatus 250 transmits the event message transmitted through the network-interface module 252 to the event-managing module 260. The event-managing module 260 analyzes the event message, and stores the event information in the storage module 256 according to the environment set in operation S404 (S416).

Whenever an event occurs in the controlled device, because the event information is transmitted to the event-information-management 250, the log information remains in the storage module 256.

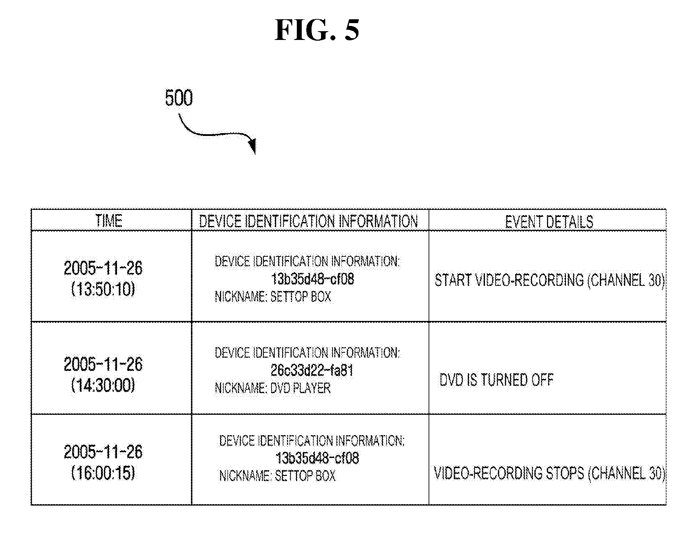

An example of displaying such log information is illustrated in FIG. 5.

Referring to FIG. 5, the event-occurrence time, the type of the controlled device, and the event details are recorded in the log information table 500.

After the event information is stored in the storage module 256, if the event-management request device 210 sends a request for the log information to the event-information-manage apparatus 250 (S418), the event-management module 260 extracts the event-log information from the storage module 256, and provides the information to the event-management-request device 210 (S420).

The event-management-request device 210 can display the log information received from the event-information-management device 250, or can output the voice signal, and can provide the signal to the user (S422).

Further, the event-management-request device 210 can sort the event log information by devices, event types or event-occurrence times, and can provide the sorted information to the user. Further, the event-management-request device 210 can provide a function of retrieving event information.

Further, whenever new event information is stored in the event-information-management apparatus 250 due to the occurrence of an event, the event-log information can be transmitted to the event-management-request device 210 promptly or at regular intervals without any request from the event-management-request device 210.

If the event-information-management apparatus 250 intends to cancel the event registration, the event-information-management apparatus 250 requests the event-registration cancellation to the controlled device 290 (S430), and the controlled device 290 performs the response to the request (S435), and thus the event information on the event occurred in the controlled device 290 is not transmitted to the event-information-management apparatus 250 any more.

Once the event-information-management apparatus 250 performs an event registration process to the controlled device 290, whenever an event occurs in the controlled device 290, because the device 250 receives the event information through the event message, the user can be provided event-long information by connecting to the event-information-management apparatus 250 any time using the event-management-request device 210.

For explanatory convenience the present specification illustrates a home network, but this is merely exemplary, and the invention can be applied to any physically and logically distinctive network.

The method and apparatus according to the exemplary embodiments of the present invention may have the following aspects.

First, event information that occurs in a controlled device can be received through a device that cannot perform a UPnP event-registration request or does not belong to the same network as the controlled device.

Second, event information can be effectively managed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for managing event information, the apparatus comprising:
an event-registration module (258) operable to control a controlled device (290) and perform an event-registration process on the controlled device (290);
an event-managing module (260) operable to receive event information about events that have occurred in the controlled device (290) according to the performance of the event-registration process, and provides the event information to an event-management-request device (210); and
a storage module (256) operable to store the event information which is received.

2. The apparatus of claim 1, wherein the event-management-request device outputs the event information which is received.

3. The apparatus of claim 1 or 2, wherein the event information comprises information on a time when an event has occurred.

4. The apparatus of claim 1, 2 or 3, wherein the event information comprises information on details of an event that has occurred.

5. The apparatus of any preceding claim, wherein the event information comprises identification information of the controlled device where an event has occurred.

6. The apparatus of any preceding claim, wherein the event-managing module (260) transmits event-log information, which comprises multiple sets of event information stored in the storage module (256) according to the request of the event-management-request device (210), to the event-management-request device (210).

7. The apparatus of claim 6, wherein the event-log information is selectively provided to the event-management-request device (210).

8. A method of managing event information, the method comprising:
performing event registration process jointly with a controlled device;
receiving event information on events that have occurred in the controlled device as the event registration process is performed; and
providing the event information which is received to an event-management-request device.

9. The method of claim 8, wherein the event information comprises information on a time when an event has occurred.

10. The method of claim 8 or 9, wherein the event information comprises information on details of an event that has occurred.

11. The method of claim 8, 9 or 10, wherein the event information comprises identification information of the controlled device where an event has occurred.

12. The method of any one of claims 8-11, further comprising storing the received event information.

13. The method of any one of claims 8-12, further comprising transmitting event-log information, which comprises the stored multiple sets of event information, to the event-management-request device.

14. The method of claim 13, wherein the event-log information is selectively provided to the event-management-request device.

15. A system for managing event information, the system comprising:
a controlled device (290);
an event-information-management apparatus (250) operable to control the controlled device (290) and receives event information about events that have occurred in the controlled device (290); and
an event-management-request device (210) operable to receive the event information from the event-information-management apparatus (250), and output the event information.

16. The system of claim 15, wherein the event-information-management apparatus (250) performs an event-registration process jointly with the controlled device (290) according to the request of the event-management-request device (210), and then receives event information about events that have occurred in the controlled device (290).

17. The system of claim 15 or 16, wherein the event-information-management apparatus (250) stores the event information which is received.

18. The system of claim 15, 16 or 17, wherein the event-information-management apparatus (250) transmits event-log information, which comprises the stored multiple sets of event information according to the request of the event-management-request device (210), to the event-management-request device (210).

19. The system of claim 18, wherein the event-log information is selectively provided to the event-management-request device (210).

20. The system of any one of claims 15-19, wherein the event information comprises information on a time when an event has occurred.

21. The system of any one of claims 15-20, wherein the event information comprises information on details of an event that has occurred.

22. The system of any one of claims 15-21, wherein the event information comprises identification information of the controlled device where an event has occurred.
